# EUROPEAN PATENT APPLICATION

(11) **EP 4 708 031 A1**
(43) Date of publication of application: **11.03.2026**
(21) Application number: 25200498.1
(22) Date of filing: 05.09.2025
(51) Int. Cl.: G06F 8/41, G06F 8/71, G06F 9/445

(54) **SYSTEM AND METHOD FOR PARSING DEVICE CONFIGURATION**

(30) Priority: 05.09.2024 US 202463690917 P
(71) Applicant: AppViewX Inc., New York, NY 10038 (US)
(72) Inventor: NAGENDRAN, Sathish Kumar, 638503 Erode (IN); RAMAKRISHNAN, Sunil Kumar, 641005 Coimbatore (IN)
(74) Representative: ip21 Ltd

(57) **Abstract**

An embodiment herein provides a method and a system for parsing device configurations using a simplified datamodel-based approach. The method includes (i) receiving a parse request from one or more sources, (ii) retrieving one or more data models and respective one or more configurations from a resource, (iii) executing communications with a user device using commands retrieved from a command repository by analyzing the retrieved one or more data models, (iv) transforming a response into parsed data by analyzing grammar configuration, (v) enhancing the parsed data by analyzing enricher configuration, and (vi) framing the enhanced data into an output response, thereby parsing device configurations.

## Description

### BACKGROUND

### Technical Field

The embodiments herein generally relate to processing of configuration data, and more particularly, relate to a system and method for parsing device configurations using a simplified datamodel-based approach using REST API responses which can be quickly extended to support multiple vendors.

### Description of the Related Art

Parsing device configurations from different vendors, especially when they have varying API formats, presents several challenges that need to be addressed to ensure effective and reliable conversion to a common domain object. Different vendors use proprietary or unique API formats to expose device configuration data. APIs may vary in terms of endpoints, request/response formats (JSON, XML, YAML), authentication mechanisms, and data structures. In the context of configuration parsing for diverse device vendors with unique API formats, developing a unified solution poses multifaceted technical challenges. Firstly, accommodating vendor-specific API contracts and formats requires specialized parsing logic tailored to each vendor's data structures and authentication methods. Secondly, implementing efficient batch processing and pagination handling for large datasets across different APIs adds complexity and extends development timelines. Thirdly, achieving a vendor-agnostic solution becomes difficult due to the disparate nature of vendor APIs, necessitating adaptable parsing modules capable of interpreting varied API behaviors. Lastly, maintaining feature parity across multiple vendors can significantly impede development speed, as integrating support for new vendors involves extensive validation and adaptation of parsing logic to meet unique API requirements.

Existing systems performing configuration parsing using Antlr presents several disadvantages, primarily related to complexity and scalability. Antlr's syntax and configuration can require a steep learning curve, which may hinder adoption and maintenance of parsing solutions. Secondly, relying heavily on Antlr for configuration parsing introduces a dependency on Antlr's compatibility and updates, which can impact the stability and long-term maintenance of the parsing implementation. Additionally, Antlr-based parsers may struggle to handle high volumes of data efficiently, leading to performance issues and potential bottlenecks when parsing large datasets. The Jolt library, an open-source tool for JSON to JSON transformation has certain limitations and drawbacks in the context of configuration parsing. Jolt provides solutions for a limited set of transformation scenarios, which may not cover all potential use cases required for comprehensive configuration parsing. Another drawback is that Jolt may require custom logic for data enrichment or augmentation, especially when dealing with complex data structures or when additional data processing is needed beyond basic transformation tasks. This reliance on custom logic can increase development effort and complexity, potentially negating some of the benefits of using a library for configuration parsing.

Accordingly, there remains a need for a device configuration parser using a simplified datamodel-based approach with REST API responses.

### SUMMARY

An embodiment herein provides a processor-implemented method for parsing device configurations. The method includes receiving a parse request from one or more sources. The method includes retrieving one or more data models and respective one or more configurations from a resource. The one or more configurations include communication configuration, grammar configuration, and enricher configuration. The method includes executing communications with a user device using commands retrieved from a command repository by analyzing the retrieved one or more data models and the communication configuration. The method includes transforming a response from the user device into parsed data by mapping fields of the response into a basic skeleton that matches at least one data model by analyzing the grammar configuration. The method includes enhancing the parsed data by modifying or augmenting the mapped fields, by converting field values into array, string, integer, or Boolean types as specified in the at least one data model, enriching the parsed data using values obtained from the device, concatenating or splitting field values, and inserting metadata and unique identifiers into the at least one data model, by analyzing the enricher configuration. The method includes framing the enhanced data into an output response, thereby parsing device configurations.

In some embodiments, the method includes selecting at least one source from one or more sources from any of: API endpoints, user interfaces, scheduled jobs, internal system components, external integrations, command-line interfaces, and event-driven triggers.

In some embodiments, the method includes executing communications with the user device including at least one of: controlling page navigation supported by the user device, implementing a back-off strategy, and reducing a number of device calls by aggregating multiple operations into a single operation.

In some embodiments, the method includes implementing the back-off strategy using any of: constant back-off, fixed back-off, exponential back-off, Fibonacci back-off, or randomized back-off.

In some embodiments, the method includes enriching the parsed data by matching unique field values with values stored in a database.

In some embodiments, the command repository comprises retry and error-handling policies that specify conditions for retrying failed communications with the user device.

In some embodiments, the method includes enhancing the parsed data by moving unmapped fields of the response from the user device into a metadata section.

In some embodiments, the method includes dynamically modify field values by performing at least one of: concatenating multiple field values into a single field, splitting a composite field into multiple fields, or converting field values such as IP address and subnet values into separate fields, thereby conforming to the at least one data model.

In an aspect, an embodiment herein provides a system for parsing device configurations. The system includes one or more sources, a resource, a memory and a processor. The one or more sources are associated with the user device, and is configured to transmit a parse request. The one or more sources is selected from any of: API endpoints, user interfaces, scheduled jobs, internal system components, external integrations, command-line interfaces, and event-driven triggers. The resource is configured to store one or more data models and respective one or more configurations. The one or more configurations include communication configuration, grammar configuration, and enricher configuration. The memory includes a set of instructions, and the processor executes the set of instructions. The processor is configured to receive the parse request from the one or more sources. The processor is configured to retrieve the one or more data models and the respective one or more configurations from the resource. The processor is configured to execute communications with the user device using commands retrieved from a command repository by analyzing the retrieved one or more data models based on the communication configuration. The processor is configured to transform a response from the user device into parsed data by mapping fields of the response into a basic skeleton that matches at least one data model based on the grammar configuration. The processor is configured to enhance the parsed data by modifying or augmenting the mapped fields, by converting field values into array, string, integer, or Boolean types as specified in the at least one data model, enriching the parsed data using values obtained from the device, concatenating or splitting field values, and inserting metadata and unique identifiers into the at least one data model, based on the enricher configuration. The processor is configured to frame the enhanced data into an output response, thereby parsing device configurations.

The system and method enables parsing of device configurations by transforming domain objects of vendor-specific formats into a common domain object model, simplifying configuration management. The system and method reduces communication overhead with devices by aggregating requests and implementing back-off strategies, improving performance in large-scale environments. The system and method enhances flexibility through the grammar configuration and encricher configuration that allow field conversions, metadata insertion, and data enrichment without dependency. The system and method ensures consistent, accurate, and enriched configuration data that can be uniformly consumed across applications, improving scalability, maintainability, and user experience.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein without departing from the spirit thereof, and the embodiments herein include all such modifications.

### BRIEF DESCRIPTION OF THE DRAWINGS

The embodiments herein will be better understood from the following detailed description with reference to the drawings, in which:
FIG. 1 illustrates a system for parsing device configurations according to some embodiments herein;
FIG. 2 illustrates the system of FIG. 1 for parsing device configurations using a simplified datamodel-based approach using REST API responses according to some embodiments herein;
FIG. 3 illustrates a flow diagram of the device configuration parsing using a simplified datamodel-based approach using REST API responses of FIG. 2 according to some embodiments herein;
FIGS. 4A and 4B illustrate a method for parsing device configurations according to some embodiments herein; and
FIG. 5 is a schematic diagram of a computer architecture in accordance with the embodiments herein.

### DETAILED DESCRIPTION OF PREFERRED EMBODIMENTS

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

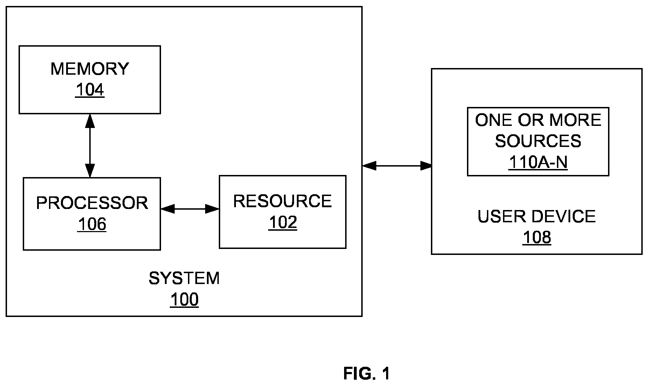

As mentioned, there remains a need for a system and method for solving device configuration parsing using a simplified datamodel-based approach using REST API responses which can be quickly extended to support multiple vendors. Referring now to the drawings, and more particularly to FIGS. 1 through 5, where similar reference characters denote corresponding features consistently throughout the figures, there are shown preferred embodiments.

FIG. 1 illustrates a system 100 for parsing device configurations according to some embodiments herein. The system 100 includes a resource 102, a memory 104, and a processor 106. The system 100 is communicatively connected with a user device 108 including one or more sources 110A-N. The user device 108 may be any of a mobile device, a smart phone, a mobile phone, a computer, a laptop, or a personal handheld device. The system 100 communicates with the user device 108 through a network. The network may be a wired network, a wireless network, or a combination of both the wired and the wireless network. The one or more sources 110A-N is configured to transmit a parse request. The one or more sources 102A-N may be selected from any of: API endpoints, user interfaces, scheduled jobs, internal system components, external integrations, command-line interfaces, and event-driven triggers. The system 100 is configured to receive the parse request from the one or more sources 102A-N. In some embodiments, the parse request is an instruction initiated by the one or more sources 110A-N that specifies which device configuration should be parsed and into what common domain object model the parsing should be applied. In some embodiments, the parse request identifies a target device i.e. a firewall, a router, a switch, or a storage appliance. In some embodiments, the parse request specifies a scope of configuration to be parsed i.e. security rules, interface details, user policies, or inventory data. The parse request may provide API details or access instructions i.e. an authentication method, an endpoint type, or a protocol. The parse request may trigger a parsing module to retrieve a vendor-specific configuration and transform it into common domain object model used by the system 100.

The resource 102 is configured to store one or more data models and respective one or more configurations. The one or more configurations include a communication configuration, a grammar configuration, and an enricher configuration. The memory 104 includes a set of instructions, and the processor 106 executes the set of instructions. In some embodiments, the memory 104 stores the set of instructions to parse the device configurations. In some embodiments, the memory 104 enables the processor 106 to parse the device configurations.

The processor 106 is configured to receive the parse request from the one or more sources 110A-N, and retrieve the one or more data models and the respective one or more configurations from the resource 104. The processor 106 is configured to execute communications with the user device 108 using commands retrieved from a command repository by analyzing the retrieved one or more data models based on the communication configuration. The processor 106 may communicate with the user device 108 using REST API communications. In some embodiments, the user device 108 is configured to execute communications including at least one of: controlling page navigation supported by the user device 108, implementing a back-off strategy, and reducing a number of device calls by aggregating multiple operations into a single operation. In some embodiments, the processor 106 implements the back-off strategy using any of: constant back-off, fixed back-off, exponential back-off, Fibonacci back-off, or randomized back-off. In some embodiments, the command repository includes retry and error-handling policies that specify conditions for retrying failed communications with the user device 108.

The processor 106 is configured to transform a response from the user device 108 into parsed data by mapping fields of the response into a basic skeleton that matches at least one data model based on the grammar configuration. The processor 106 is configured to enhance the parsed data by modifying or augmenting the mapped fields, by converting field values into array, string, integer, or Boolean types as specified in the at least one data model, enriching the parsed data using values obtained from the device, concatenating or splitting field values, and inserting metadata and unique identifiers into the at least one data model, based on the enricher configuration. In some embodiments, the processor 106 enhances the parsed data by moving unmapped fields of the response from the user device into a metadata section. In some embodiments, the processor 106 enriches the parsed data by matching unique field values with values stored in a database. In some embodiments, the database can be in the memory 104. In some embodiments, the processor 106 dynamically modifies field values by performing at least one of: concatenating multiple field values into a single field, splitting a composite field into multiple fields, or converting field values such as IP address and subnet values into separate fields, thereby conforming to the at least one data model. The processor 106 is configured to frame the enhanced data into an output response, thereby parsing device configurations. The output response may be framed by the processor 106 including a standardized representation of a device configuration. For example, when parsing a firewall configuration, the output response may include domain objects such as security rules, access control lists, and network interface mappings in a pre-defined format.

For example, the parse request may be initiated by an inventory manager to parse all configurations of a newly added firewall device. The firewall returns a set of rule objects in a vendor's proprietary format. The system 100 transforms these vendor-specific rules into standardized security role domain objects, allowing them to be displayed and managed in a common inventory view. For example, the parse request may instruct the system 100 to retrieve security policies from different vendors, i.e. firewall of a first vendor uses "deny"/"allow," while firewall of a second vendor uses "block"/"permit".

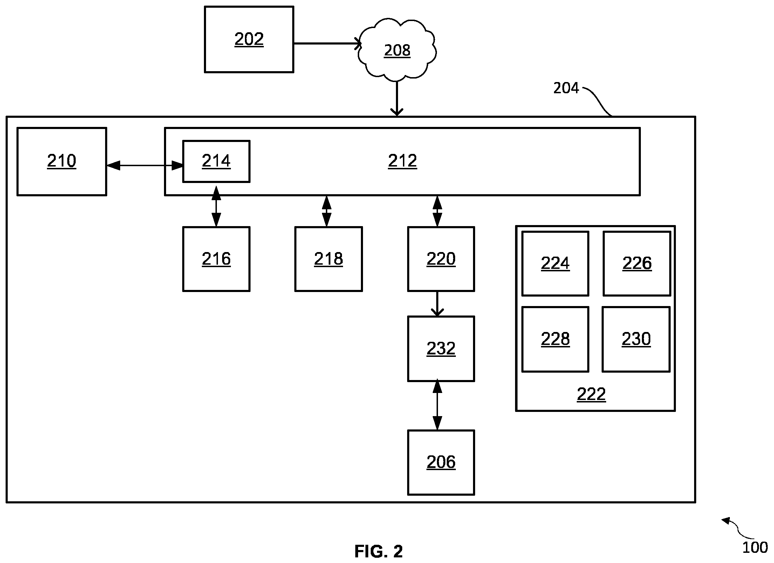

FIG. 2 illustrates the system 100 of FIG. 1 for parsing device configurations using a simplified datamodel-based approach using REST API responses according to some embodiments herein. The system 100 includes a device 202, a device configuration parsing server 204 including a database 206 and a network 208. The device 202 may be any of: a network device, a server and computing equipment, an Internet of Things (IoT) device, a storage and backup device, a security device, or a software application and service. The system 100 configured to receive the parse request from sources within a software system, including API endpoints, user interfaces, scheduled jobs, internal system components, external integrations, command-line interfaces, and event-driven triggers.

The device configuration parsing server 204 includes a command repository 210 used for the REST API communication with the device 202 based on the configuration. The command repository 210 stores predefined commands or API requests along with associated configurations and parameters. The device configuration parsing server 204 includes an internal adapter 212 to adapt an interface of a module/component to be compatible with another interface within the system 100. The internal adapter 212 includes a command repository adapter 214 that acts as an interface between an application and the command repository 210 to abstract the details of how commands are stored and retrieved from the command repository 210 providing a standardized interface for the application to interact with the commands.

The device configuration parsing server 204 includes a batch processing module 216 that controls page navigation supported from the device 202. The batch processing module 212 is further configured to handle exceptions and back-off strategy. The back-off strategy determines how the device configuration parsing server 204 should react and retry communication attempts in the occurrence of failures. Backoff configuration suggests on which HTTP code, the retry needs to be done and how to handle the error messages.

The back-off strategy includes the constant back-off and involves using a fixed delay period between consecutive retries. After a communication failure, the device configuration parsing server 204 waits for a constant duration (e.g., in a range of 1 second to 2 seconds) before attempting the next retry. The back-off strategy includes the fixed back-off involves using a longer fixed delay between retries. The delay period remains fixed (e.g., in a range of 4 seconds to 6 seconds) regardless of the number of retries. The back-off strategy includes the exponential back-off that exponentially increases the delay period after each consecutive retry attempt. After a failure, the device configuration parsing server 204 waits for an initial delay (e.g., 1 second), which doubles with each subsequent retry (e.g., 2 seconds, 4 seconds, 8 seconds, and the like). The back-off strategy includes the fibonacci back-off which is a variant of exponential back-off that uses fibonacci sequence values to determine delay periods. After a failure, the device configuration parsing server 204 waits for delay periods defined by Fibonacci numbers (e.g., 1 second, 2 seconds, 3 seconds, 5 seconds, 8 seconds, and the like). The back-off strategy includes the randomized back-off that introduces randomness into delay periods to avoid synchronization effects and network congestion. After a failure, the device configuration parsing server 204 waits for a random duration within a predefined range (e.g., between 1 and 10 seconds). The batch processing module 212 is configured to handle different page navigations supported by the device 202. Handling different page navigations supported by devices involves managing and executing a series of navigation commands or actions to interact with device interfaces or user interfaces (UIs). The batch processing module 212 is configured to reduce the number of device calls by aggregation. The batch processing module 212 is configured to reduce the number of individual device calls or requests by consolidating multiple operations into a single batch operation. This approach optimizes resource utilization, minimizes network overhead, and improves overall efficiency when interacting with devices or an external system.

The grammar transforming module 218 is configured to transform a response from the device 202 to a basic skeleton that matches a data model based on the configuration. The device configuration parsing server 204 includes an enricher module 220 that enhances the transformed response from the grammar transforming module 218 to match the data model based on configuration. The device configuration parsing server 204 includes a resource 222 that includes data models 224 with configurations that specifies the domain objects common across multiple vendors. The resource 222 includes communication configuration 226 which includes settings, parameters, or resources that define how the application communicates with external entities, such as devices, services, or APIs. The resource 222 includes grammar configuration 228 which is used to transform device configuration to domain objects. The resource 222 includes enricher configuration 230 used to enhance/transform the field values in the domain object to match the datamodel convention. The enricher module 220 interacts with the database 206 through a database adapter 232 that abstracts the interaction with the database 206. All the configurations are stored with the data model name in JSON format. The enricher module 220 includes two types of enrichers that include native and config-driven. Native enricher does not require any configuration to perform enrichment.

The enricher module 220 incudes an enricher native sub-module configured to enrich data based on the defined data model. The enricher module 220 includes an enricher config-driven sub-module configured to enrich data based on custom configurations. The enricher module 220 includes an enricher native metadata converter sub-module configured to move the fields not specified in the data model inside the metadata key. The enricher module 220 includes an enricher native array field converter configured to convert to the array field type specified in the data model. The enricher module 220 includes an enricher native string field converter configured to convert to the string field type specified in the data model. The enricher module 220 includes an enricher native integer field converter sub-module configured to convert to the integer field type specified in the data model. The enricher module 220 includes an enricher native DB-based enricher sub-module configured to enrich the data already parsed and stored in the database 206 by matching the unique fields specified in the field as well in the data parsed. The enricher module 220 includes an enricher native boolean field converter sub-module configured to convert to the boolean field type specified in the data model. The enricher module 220 includes an enricher native metadata enricher sub-module that enriches data model-related details and transaction ID details in the data. The enricher module 220 includes an enricher config-driven device enricher sub-module configured to enrich fields from devices sent as part of the payload. The enricher module 220 includes an enricher config-driven attribute enricher sub-module configured to enrich fields from attributes sent as part of the payload. The enricher module 220 includes an enricher config-driven string one-to-one enricher sub-module configured to provide one-to-one mapping between the parsed data and custom constant string. The enricher module 220 includes an enricher config-driven string split and get enricher sub-module configured to provide the ability to split and get value from the parsed field. The enricher module 220 includes an enricher config-driven string concatenation enricher sub-module configured to provide enrichment by concatenating different strings and supports both constant and dynamic fields parsed. The enricher module 220 includes an enricher config-driven expression-based enricher sub-module configured to enrich the field through custom expression. The enricher module 220 includes an enricher config-driven rest enricher sub-module configured to enrich content using transformed and enriched device responses for dependent data models. The enricher module 220 includes a enricher config-driven unique field stamping sub-module configured to add unique fields from the data model to the data model fields inside the model.

For example, the parse request may be automatically initiated when a vendor device pushes an update event i.e. software upgrade changes default firewall policies. The system 100 transforms the updated configuration into the common domain object format and updates a central database, ensuring consistency across the management applications. For example, the device 202 may issue the parse request through the application UI to parse only the security domain objects i.e. access rules, of a specific firewall, ignoring other configuration sections, which enables users to quickly review, update, or audit a particular class of domain objects without vendor-specific complexity.

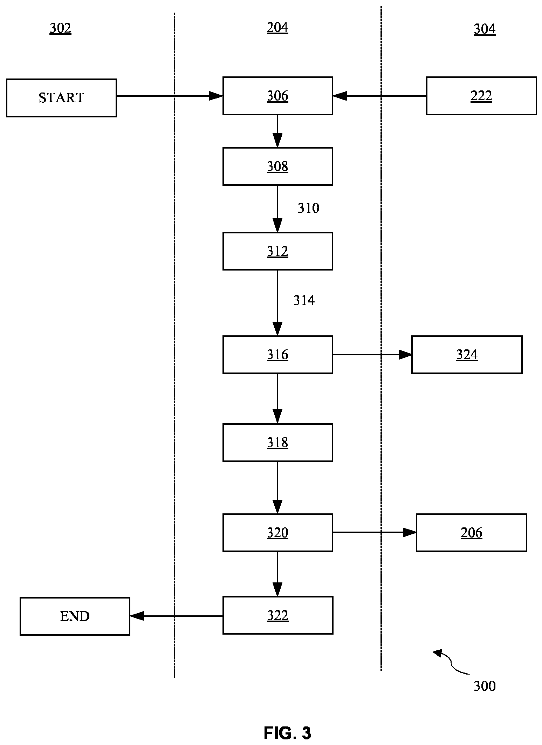

FIG. 3 illustrates a flow diagram of the device configuration parsing using a simplified datamodel-based approach using REST API responses of FIG. 2 according to some embodiments herein. The flow diagram 300 includes a vendor 302, the device configuration parsing server 204 and a storage 304. At a step 306, data models based on the device 202 is retrieved from the resource 222. At a step 308, the data models are re-ordered based on dependencies. All data models are looped at a step 310. At a step 312, batch processing is performed. Handling pagination at a step 314 includes managing the retrieval and parsing of configuration data that is divided into multiple pages or batches. The batch-processed data is communicated to the device 202. On failure, the data is stored in memory cache at 324 through a transmission at step 316. At a step 318, grammar transformation is performed. At a step 320, data enrichment is performed and stored on the database 206. At a step 322, a response is framed and transferred to the vendor 302.

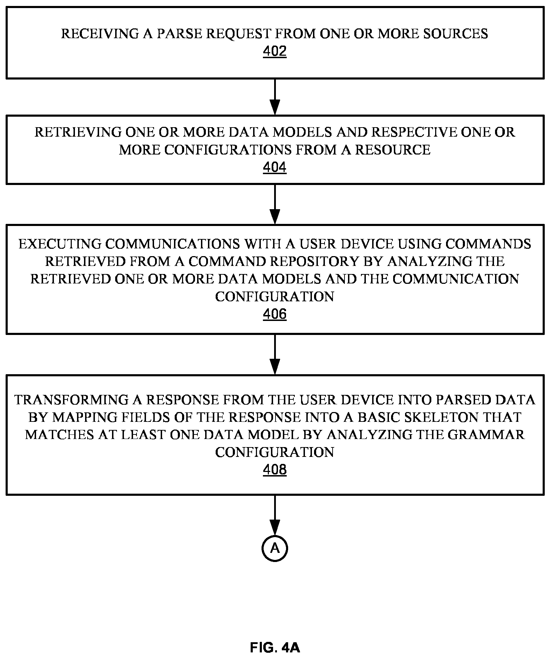

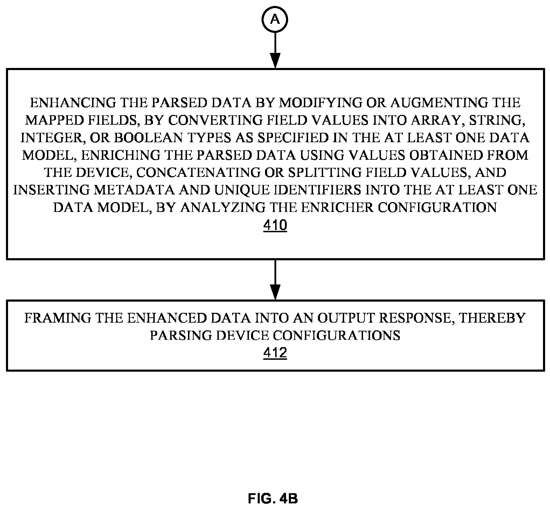

FIGS. 4A and 4B illustrate a method for parsing device configurations according to some embodiments herein. At a step 402, the method includes receiving a parse request from one or more sources. At a step 404, the method includes retrieving one or more data models and respective one or more configurations from a resource. The one or more configurations comprise communication configuration, grammar configuration, and enricher configuration. At a step 406, the method includes executing communications with a user device using commands retrieved from a command repository by analyzing the retrieved one or more data models and the communication configuration. At a step 408, the method includes transforming a response from the user device into parsed data by mapping fields of the response into a basic skeleton that matches at least one data model by analyzing the grammar configuration. At a step 410, the method includes enhancing the parsed data by modifying or augmenting the mapped fields, by converting field values into array, string, integer, or Boolean types as specified in the at least one data model, enriching the parsed data using values obtained from the device, concatenating or splitting field values, and inserting metadata and unique identifiers into the at least one data model, by analyzing the enricher configuration. At a step 412, the method includes framing the enhanced data into an output response, thereby parsing device configurations. In some embodiments, the method includes re-ordering the data models based on dependencies, and communicating to the device via a command repository that facilitates REST API communication with the device based on configuration.

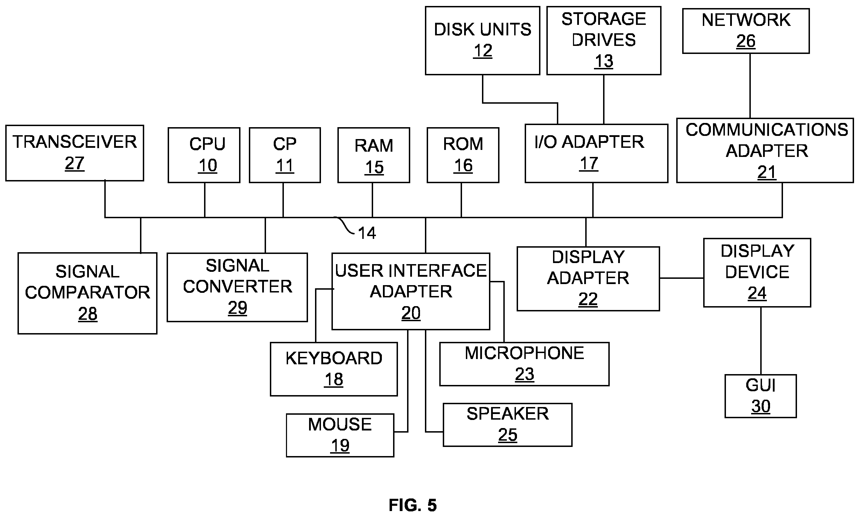

A representative hardware environment for practicing the embodiments herein is depicted in FIG. 5, with reference to FIGS. 1 through 4. This schematic drawing illustrates a hardware configuration of a server 114 /computer system in accordance with the embodiments herein. The server 114 /computer includes at least one processing device 10 and a cryptographic processor 11. The special-purpose CPU 10 and the cryptographic processor (CP) 11 may be interconnected via system bus 14 to various devices such as a random access memory (RAM) 15, read-only memory (ROM) 16, and an input/output (I/O) adapter 17. The I/O adapter 17 can connect to peripheral devices, such as disk units 12 and tape drives 13, or other program storage devices that are readable by the system. The server 114 / computer can read the inventive instructions on the program storage devices and follow these instructions to execute the methodology of the embodiments herein. The server 114 /computer system further includes a user interface adapter 20 that connects a keyboard 18, mouse 19, speaker 25, microphone 23, and/or other user interface devices such as a touch screen device (not shown) to the bus 14 to gather user input. Additionally, a communication adapter 21 connects the bus 14 to a data processing network 26, and a display adapter 22 connects the bus 14 to a display device 24, which provides a graphical user interface (GUI) 30 of the output data in accordance with the embodiments herein, or which may be embodied as an output device such as a monitor, printer, or transmitter, for example. Further, a transceiver 27, a signal comparator 28, and a signal converter 29 may be connected with the bus 14 for processing, transmission, receipt, comparison, and conversion of electric or electronic signals.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the spirit and scope of the appended claims.

## Claims

1. A processor-implemented method for parsing device configurations, wherein the method comprises:
receiving a parse request from one or more sources;
retrieving one or more data models and respective one or more configurations from a resource, wherein the one or more configurations comprise communication configuration, grammar configuration, and enricher configuration;
executing communications with a user device using commands retrieved from a command repository by analyzing the retrieved one or more data models and the communication configuration;
transforming a response from the user device into parsed data by mapping fields of the response into a basic skeleton that matches at least one data model by analyzing the grammar configuration;
enhancing the parsed data by modifying or augmenting the mapped fields, by converting field values into array, string, integer, or Boolean types as specified in the at least one data model, enriching the parsed data using values obtained from the device, concatenating or splitting field values, and inserting metadata and unique identifiers into the at least one data model, by analyzing the enricher configuration; and
framing the enhanced data into an output response, thereby parsing device configurations.

2. The processor-implemented method of claim **1,** wherein the method comprises,
selecting at least one source from one or more sources from any of: API endpoints, user interfaces, scheduled jobs, internal system components, external integrations, command-line interfaces, and event-driven triggers.

3. The processor-implemented method of claim 1, wherein the method comprises,
executing communications with the user device comprising at least one of: controlling page navigation supported by the user device, implementing a back-off strategy, and reducing a number of device calls by aggregating multiple operations into a single operation.

4. The processor-implemented method of claim 3, wherein the method comprises,
implementing the back-off strategy using any of: constant back-off, fixed back-off, exponential back-off, Fibonacci back-off, or randomized back-off.

5. The processor-implemented method of claim 1, wherein the method comprises,
enriching the parsed data by matching unique field values with values stored in a database.

6. The processor-implemented method of claim 1, wherein the command repository comprises retry and error-handling policies that specify conditions for retrying failed communications with the user device.

7. The processor-implemented method of claim 1, wherein the method comprises,
enhancing the parsed data by moving unmapped fields of the response from the user device into a metadata section.

8. The processor-implemented method of claim 1, wherein the method comprises,
dynamically modifying field values by performing at least one of: concatenating multiple field values into a single field, splitting a composite field into multiple fields, or converting field values such as IP address and subnet values into separate fields, thereby conforming to the at least one data model.

9. A system for parsing device configurations, wherein the system comprises:
a resource configured to store one or more data models and respective one or more configurations, wherein the one or more configurations comprise communication configuration, grammar configuration, and enricher configuration;
a memory that comprises a set of instructions; and
a processor that executes the set of instructions and is configured to:
receive a parse request from one or more sources associated with a user device, wherein the one or more sources is selected from any of: API endpoints, user interfaces, scheduled jobs, internal system components, external integrations, command-line interfaces, and event-driven triggers;
retrieve the one or more data models and the respective one or more configurations from the resource;
execute communications with the user device using commands retrieved from a command repository by analyzing the retrieved one or more data models based on the communication configuration;
transform a response from the user device into parsed data by mapping fields of the response into a basic skeleton that matches at least one data model based on the grammar configuration;
enhance the parsed data by modifying or augmenting the mapped fields, by converting field values into array, string, integer, or Boolean types as specified in the at least one data model, enriching the parsed data using values obtained from the device, concatenating or splitting field values, and inserting metadata and unique identifiers into the at least one data model, based on the enricher configuration; and
frame the enhanced data into an output response, thereby parsing device configurations.
